# EUROPEAN PATENT SPECIFICATION

(11) **EP 1 499 562 B1**
(45) Date of publication and mention of the grant of the patent: **05.12.2012**
(21) Application number: 02724457.3
(22) Date of filing: 07.05.2002
(51) Int. Cl.: C02F 1/02, B67D 1/07, A61L 2/07

(54) **SELF-SANITISING WATER TREATMENT APPARATUS WITH A RESERVOIR FOR TREATED WATER THAT INCLUDES A HEATING ELEMENT**
SELBSTDESINFIZIERENDE VORRICHTUNG ZUR WASSERBEHANDLUNG MIT EINEM EIN HEIZELEMENT ENTHALTENDEN RESERVOIR FÜR BEHANDELTES WASSER
APPAREIL DE TRAITEMENT D'EAU A AUTO-STERILISATION POSSEDANT UN RESERVOIR POUR EAU TRAITEE QUI COMPREND UN ELEMENT CHAUFFANT

(43) Date of publication of application: 26.01.2005
(73) Proprietor: The Coca-Cola Company, Atlanta, Georgia 30313 (US)
(72) Inventor: Williams, Graham, Solihull West Midlands B90 4JR (GB)
(74) Representative: Taylor, Adam David
(86) International application number: PCT/GB2002/002097
(87) International publication number: WO 2003/095367

(56) References cited:
- WO-A-01/19734
- WO-A-01/92143
- GB-A- 2 350 358

## Description

This invention relates to a water treatment apparatus and is particularly concerned to provide a water treatment apparatus that can readily be sanitised by the passage of steam through it.

The invention is also particularly concerned with water treatment apparatus in which water is purified and is intended for use in a post-mix beverage dispenser and, although not intended to be limited thereto, the invention will be more specifically described below with reference to purifying water for post-mix beverages.

Water treatment apparatus for post-mix beverages is well known. For example it is known from US 4 844 796 to provide a water treatment apparatus for post-mix beverage dispensers in which the water to be treated is passed into a removable disposable cartridge having a first, reactor section and a second, filter section wherein the water is heated in the reactor section firstly by passing through a heat exchanger and secondly by means of a heater. The heater is positioned in a central aperture defined by an annular portion of the cartridge whereby it does not come into direct contact with the water.

A similar heater arrangement is disclosed in US 5 858 248 where the heater can be located in the central cavity of a disposable cartridge of a water treatment device. Alternative heater arrangements disclosed in this application are to position the heater around the outer cylindrical surface of the cartridge or to have a gas cylinder heater beneath a central "chimney", i.e. the central cavity defined by the annular portion of the cartridge.

In our international patent application No. PCT/GB 00/03329 we have described and claimed a water treatment apparatus having an inlet for the water to be treated, an outlet for the treated water, a heater within the housing to come into direct contact with the water and a filter between the heater and the outlet, and means to fill the housing with water up to a maximum level which leaves a headspace between the water and the roof of the housing, the entrance to the outlet being below the operating water level.

In most of the previously suggested water treatment apparatus arrangements, it is usual for the purified water to be passed to a reservoir, possibly via a cooler, and the purified water is drawn off from the reservoir as required, e. g. for mixing with a concentrate to form a post-mix drink. The reservoir may conveniently be a flexible container, e. g. a collapsible bag.

It will be appreciated that the water treatment apparatus, regardless of its specific construction, must from time to time be sanitised to ensure that no unwanted contamination, particularly bacterial contamination, can harmfully affect the treated water.

Various means of achieving the desired sanitisation, of varying degrees of complexity and success, have been proposed. It is an object of the present invention to provide an improved means of achieving the desired sanitisation.

Accordingly, the invention provides a water treatment apparatus comprising a treatment housing containing a first heater and a filter for treating water, the housing being connected to a reservoir for the treated water from the housing, the reservoir containing a second heater to heat the treated water to generate steam, controls to start and stop flow of water to be treated through the housing and to switch on the reservoir heater and to stop the flow of water when sanitisation is required, whereby steam may be passed through the apparatus in the reverse direction to the water, the housing having a relief valve for escape of the steam from the reservoir, and wherein the filter is between the first heater and an outlet for the treated water.

The invention also provides a related method of sanitising water treatment apparatus of the type having a treatment housing for water to be treated containing a first heater and a filter between the first heater and an outlet for treated water, the apparatus including a reservoir for receiving treated water from the treatment housing, the method including the steps of filtering water in the treatment housing, flowing the treated water into the reservoir, stopping water flow through the apparatus, heating treated water in the reservoir to generate steam, and passing the steam through the apparatus in a reverse direction to a normal treatment water flow direction.

Clearly the construction of and material from which the reservoir is made must be sufficiently strong to withstand the steam pressure and temperature when the reservoir heater is used. For example, a rigid metal or plastic reservoir should be able to withstand a pressure of at least one bar and a temperature up to about 120°C.

The treatment housing may conveniently be in the form of a disposable cartridge although this is not essential. The treatment for the water passing through the housing will usually comprise a heater, which may be in direct or in indirect contact with the water. The filter may be between the heater and the outlet from the housing. The housing may additionally comprise one or more perforated screens or meshes between the heater and the filter.

The outlet from the treatment housing, which leads to the reservoir, may conveniently be through the closed upper end of the housing e.g. of the cartridge or other cylindrical housing construction.

The housing preferably has one or more probes or other means to detect the water level therein whereby the water may be filled up to a maximum level to leave a headspace in the filled housing. The outlet from the housing preferably extends beneath the level of the water so that hot water leaving the housing does not go through the headspace. Steam and volatiles collect in the headspace during normal operation of the apparatus and these may be allowed to escape through a pressure relief valve, which may be the same pressure relief valve used to vent the steam during the sanitisation mode.

The untreated water, which may be mains water, may first pass through a heat exchanger to warm it before it passes into the housing. Treated heated water leaving the housing may be passed in the opposite direction through the heat exchanger to act as the heat exchange medium to warm the incoming mains water. The treated water is, thereby, conveniently cooled before being passed to the reservoir.

In another preferred embodiment the heat exchanger and the water treatment housing may be contained in a single unit, preferably with the heat exchanger directly beneath the water treatment housing. This may be a unitary structure or two separate units, water treatment housing and heat exchanger, which may be completely or partially disposable. For example, the water treatment housing may be a disposable cartridge and the heat exchanger non-disposable.

This single unit arrangement has the advantage that pipework between the heat exchanger and the water treatment housing can be considerably reduced, if not eliminated. The heated water from the heat exchanger may pass directly into the water treatment housing and the treated water from the housing can pass directly back to the coils of the heat exchanger in order to heat the incoming water. This arrangement reduces the regions where precipitation deposits may build up and harmfully affect water flow. Also, with the heat exchanger directly below the water treatment housing, the inlet to the water treatment housing can readily enter at its cooler, lower end.

The inlet for the water to be treated may conveniently enter through the floor of the treatment housing but this is not essential. For example, in some embodiments the water to be treated may enter the housing through a pipe entering the housing through or near the roof, which pipe extends downwardly inside the housing towards its base. On leaving the pipe, the water, once the housing is filled to the lower end of the pipe, will then travel upwardly.

It will be appreciated that, where a heat exchanger is used as described above, the steam generated in the reservoir in the sanitisation mode will pass through the heat exchanger before reaching the housing and hence will also sanitise the heat exchanger.

The heater in the treatment housing will have a wattage capacity determined by the volume of water to be treated and the throughput of the treatment housing. For example, a heater of from 1000 to 2000 watts can usefully be employed for a throughput of 12 to 18 litres per hour, i.e. the input of water into the treatment housing.

The heater in the reservoir, which may be, e.g. an immersion heater, will similarly require a wattage dependent on the capacity of the reservoir, e.g. for a capacity of from 20 to 50 litres, a wattage of from 1500 to 2500 would be suitable.

The reservoir with the heater may be a small secondary tank primarily for sanitisation purposes and a separate larger reservoir downstream of the secondary tank may be employed, if desired.

The control to start and stop flow of untreated water into the treatment housing may be a simple on/off valve, e.g. on the mains supply pipeline. The control to switch on the heater in the reservoir may be co-ordinated so as to be timed to operate shortly after the flow of untreated water is stopped or, alternatively, the flow of water may be stopped at the same time or shortly after the reservoir heater is switched on. The outlet from the reservoir should be closed when the reservoir heater is in use, except as described below where it is desired to sanitise any equipment downstream of the reservoir. The control means preferably ensures that steam cannot be generated in the reservoir to reach a pressure at which it is forced to travel through the apparatus in the opposite direction to normal water travel until the water flow has been switched off. Water, condensed steam and steam may all be forced through the pressure relief valve in the treatment housing during the sanitisation process.

The pressure relief valve may operate, for example, at about 0.7 bar. It may be, for example, a spring-loaded or a dead weight valve of the types well known in the art. The pressure relief valve may lead to a condenser tube so that steam and unwanted volatiles can be cooled before being allowed to drain away.

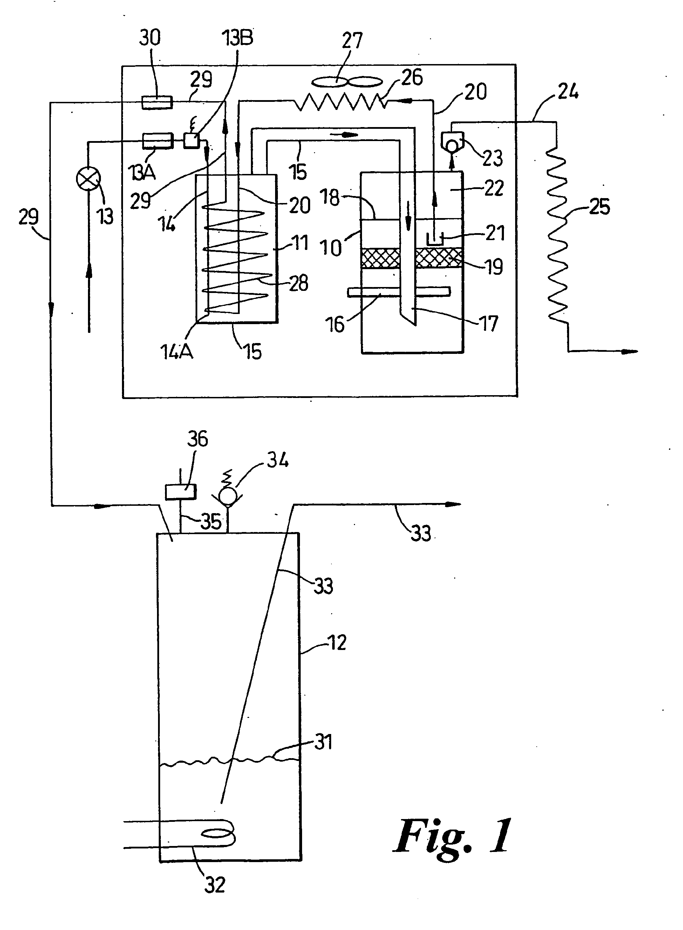

Embodiments of the invention will now be described with reference to the accompanying drawing (Figure 1) which is a schematic arrangement of one form of apparatus according to the invention.

The water treatment apparatus of Figure 1 has a treatment housing 10, a heat exchanger 11 and a reservoir 12 for the treated water. An inlet solenoid 13A controls supply of untreated, usually mains, water into the heat exchanger 11. (The direction of water flow through the apparatus during normal treatment procedure is shown by the arrows.) When the inlet solenoid is operated to allow water inflow, the untreated water then passes via the mains water stop valve 13, valve 13A and a pressure regulator 13B into an inlet tube 14 which extends through the top of roof of heat exchanger 11 and extends down inside the heat exchanger to a position a little above its base 15. Water exits from the lower end 14A of tube 14 and, when the heat exchanger is filled with water, it exits from tube 15 in its roof. Heat exchanger 11 also contains a return coil 28 to receive treated water from housing 10 and this is described in more detail below.

Inside water treatment housing 10 is a high density electric heating element 16 of, say, 1500 watts capacity in the lower half of the housing. Element 16 is connected to conventional electrical circuiting (not shown) whereby the heater can be switched on and off as required.

Untreated water entering housing 10 from tube 15 passes down a larger internal diameter tube 17 which extends to the lower half of the housing. Incoming water fills housing 10 to a maximum level 18 controlled by one or more probes (not shown). The water, therefore, surrounds heater 16 and can be heated thereby.

Surrounding tube 17 and spaced above heater 16 is a filter 19. Heated water is forced upwardly through the filter by the pressure of incoming water up to level 18. The heated water leaves housing 10 via a tube 20 through its upper end. Tube 20 extends below water level 18 and receives the heated water from a "quiet zone" defined by a tray 21 beneath the water level 18. Delivery pressure of the treated water into tube 29 is governed by the boiling taking place in the headspace 22 above water level 18 and is controlled by pressure relief valve 23 which allows hot water and/or steam with unwanted volatiles from the treated water to escape into relief tube 24 and cooling coil 25 when the internal pressure in the housing exceeds a predetermined value, e.g. 0.7 bar. From tube 25 the condensate passes to a drain.

The hot treated water passes through tube 20 via a cooling tube 26 and fan 27 into heat exchanger 11. Tube 20 communicates into coil 28 near base 15 of the heat exchanger and the treated water passes up the coil 28 to exit through tube 29 through the heat exchanger roof. The treated water, therefore, exchanges heat with the cooler incoming untreated water inside the heat exchanger. Tube 29 leads via an outlet solenoid valve 30 into reservoir 12.

The water is shown having reached a level 31 in reservoir 12, which contains a heater 32 near its base. An outlet tube 33 extends below the water level and is the dispense means of treated water from the reservoir.

The roof of the reservoir 12 contains a pressure relief valve 34 set, for example, at about 1 bar, for safety purposes and an air vent 35 containing a filter 36. This venting arrangement allows smooth filling of the reservoir while preventing unwanted contamination from entering.

When it is desired to sanitise the apparatus, flow of water into the apparatus is switched off by closing inlet solenoid 13A. Reservoir heater 32 is switched on with outlet 33 closed, thereby generating steam in the headspace above water level 31. The pre-cool fan 27 is switched off. Outlet solenoid 30 is maintained open. Steam generated in the reservoir passes in the reverse direction to the normal water flow direction through tube 29, coil 28 of the heat exchanger 11, cooling tube 26 and tube 20 into the treatment housing 10. When sufficient pressure is generated in the heat exchanger, steam and/or condensed water is vented through relief valve 23, line 24 and condenser 25 to drain away.

The arrangement may be automatically controlled by a thermistor (not shown) in the housing 10 which can switch off the reservoir heater when a predetermined temperature is reached.

Normal water treatment may then be resumed.

If desired steam and hot water may also be sent downstream by opening outlet 33 of the reservoir during the sanitisation process to sanitise the downstream equipment, e. g. the post-mix apparatus.

The apparatus of the invention has significant advantages in that:
it does not require chemicals for sanitisation;
it can readily be adapted for existing apparatus; and
it can be partly or fully automated, as desired.

The invention also includes a method of sanitising water treatment apparatus of the type having a treatment housing for water to be treated containing a first heater and a filter between the first heater and an outlet for treated water, the apparatus including a reservoir for receiving treated water from the treatment housing, the method including the steps of filtering water in the treatment housing, flowing the treated water into the reservoir, stopping water flow through the apparatus, heating treated water in the reservoir to generate steam, and passing the steam through the apparatus in a reverse direction to a normal treatment water flow direction.

Preferably, the method further includes the step of passing the steam in the direction of water flow from the reservoir to sanitise apparatus downstream of the reservoir.

## Claims

1. A water treatment apparatus comprising a treatment housing (10) containing a first heater (16) and a filter (19) for treating water, the housing being connected to a reservoir (12) receiving treated water from the housing, the reservoir containing a second heater (32) to heat treated water to generate steam, controls to start and stop flow of water to be treated through the housing and to switch on the reservoir heater (32) and to stop the flow of water sanitisation is required, whereby steam may be passed through the reverse apparatus in the reverse direction to the water, the housing having a relief valve (23) for escape of the steam from the reservoir, and wherein the filter (19) is between the first heater (16) and an outlet (20) for the treated water.

2. A water treatment apparatus according to Claim 1, in which the reservoir (12) is of metal or plastic and can withstand a pressure of at least one bar and a temperature up to 120°C.

3. A water treatment apparatus according to Claim 1 or 2, in which the housing (10) is a disposable cartridge.

4. A water treatment apparatus according to Claim 1, 2 or 3 in which the first heater (16) is below the filter (19).

5. A water treatment apparatus according to Claim 4, which contains one or more perforated meshes or screens between the first heater (16) and the filter (19).

6. A water treatment apparatus according to any preceding claim, in which the housing (10) has a probe to detect the water level and the apparatus controls are arranged to switch off incoming water when a predetermined maximum water level (18) is reached, the maximum level leaving a headspace (22) in the housing above the water.

7. A water treatment apparatus according to Claim 6, in which the relief valve (23) for the steam from the reservoir (12) is positioned above the maximum water level (18) so as to allow escape from the headspace (22) of steam and volatiles from the treated water.

8. A water treatment apparatus according to any preceding claim, which includes a heat exchanger (11) connected to an inlet (17) to the treatment housing (10) whereby untreated water can be passed through the heat exchanger on its way to the treatment housing, the heat exchanger being also connected to the outlet (20) from the treatment housing whereby heated treated water can be passed through the heat exchanger in heat exchange relationship with the incoming untreated water.

9. A water treatment apparatus according to any preceding claim, in which the reservoir heater (32) has a wattage of from 1500 to 2500 and the reservoir (12) has a capacity of from 20 to 50 litres.

10. A water treatment apparatus according to anyone of Claims 1 to 8, in which the reservoir (12) with the second heater (32) is a secondary tank and the apparatus includes a separate larger reservoir downstream of the tank.

11. A water treatment apparatus according to any preceding claim, in which the controls are arranged to switch on the reservoir heater (32) at the same time or shortly after flow of untreated water into the housing (10) is stopped.

12. A water treatment apparatus according to any preceding claim, in which the pressure relief valve (23) is of the spring-loaded or dead weight type.

13. A water treatment apparatus according to any preceding claim, in which the pressure relief valve (23) leads to a condenser tube (25) and then a drain.

14. A method of sanitising water treatment apparatus of the type having a treatment housing (10) for water to be treated containing a first heater (16) and a filter (19) between the first heater (16) and an outlet (20) for treated water, the apparatus including a reservoir (12) for receiving treated water from the treatment housing, the method including the steps of filtering water in the treatment housing, flowing the treated water into the reservoir, stopping water flow through the apparatus, heating treated water in the reservoir to generate steam, and passing the steam through the apparatus in a reverse direction to a normal treatment water flow direction.

15. A method according to claim 14, in which the steam is also passed in the direction of normal treatment water flow from the reservoir (12) to sanitise apparatus downstream of the reservoir.

## Patentansprüche

1. Wasseraufbereitungsvorrichtung, die ein Aufbereitungsgehäuse (10) umfasst, das ein erstes Heizelement (16) und einen Filter (19) zum Aufbereiten von Wasser enthält, wobei das Gehäuse mit einem Behälter (12) verbunden ist, der aufbereitetes Wasser aus dem Gehäuse aufnimmt, wobei der Behälter ein zweites Heizelement (32) enthält, um das aufbereitete Wasser aufzuheizen, um Dampf zu erzeugen, wobei eine Steuerung, um die Strömung des aufzubereitenden Wassers durch das Gehäuse zu starten und zu stoppen und um das Behälterheizelement (32) einzuschalten und um den Ablauf der Wasserreinigung zu stoppen, erforderlich ist, wodurch Dampf durch die umgekehrte Vorrichtung in umgekehrter Richtung zum Wasser geleitet wird, wobei das Gehäuse ein Überdruckventil (23) zum Entweichen des Dampfes aus dem Behälter aufweist und wobei sich der Filter (19) zwischen dem ersten Heizelement (16) und einem Auslass (20) für das aufbereitet Wasser befindet.

2. Wasseraufbereitungsvorrichtung nach Anspruch 1, wobei der Behälter (12) aus Metall oder Kunststoff besteht und einem Druck von wenigstens einem Bar und einer Temperatur bis zu 120 °C standhalten kann.

3. Wasseraufbereitungsvorrichtung nach Anspruch 1 oder 2, wobei das Gehäuse (10) eine Wegwerfpatrone ist.

4. Wasseraufbereitungsvorrichtung nach Anspruch 1, 2 oder 3, wobei sich das erste Heizelement (16) unterhalb des Filters (19) befindet.

5. Wasseraufbereitungsvorrichtung nach Anspruch 4, die ein oder mehrere perforierte Gitter oder Siebe zwischen dem ersten Heizelement (16) und dem Filter (19) umfasst.

6. Wasseraufbereitungsvorrichtung nach einem der vorhergehenden Ansprüche, wobei das Gehäuse (10) eine Sonde aufweist, um den Wasserstand zu detektieren, und die Steuerung der Vorrichtung ausgelegt ist, um einlaufendes Wasser abzuschalten, wenn ein vorgegebener maximaler Wasserstand (18) erreicht ist, wobei der maximale Wasserstand einen Kopfraum (22) im Gehäuse oberhalb des Wassers lässt.

7. Wasseraufbereitungsvorrichtung nach Anspruch 6, wobei das Überdruckventil (23) für den Dampf aus dem Behälter (12) oberhalb des maximalen Wasserstands (18) positioniert ist, so dass es das Entweichen von Dampf und flüchtigen Stoffen aus dem aufbereiteten Wasser aus dem Kopfraum (22) ermöglicht.

8. Wasseraufbereitungsvorrichtung nach einem der vorhergehenden Ansprüche, die einen Wärmetauscher (11) umfasst, der mit einem Einlass (17) zum Aufbereitungsgehäuse (10) verbunden ist, wodurch nicht aufbereitetes Wasser auf seinem Weg zum Aufbereitungsgehäuse durch den Wärmetauscher geleitet werden kann, wobei der Wärmetauscher auch mit dem Auslass (20) aus dem Aufbereitungsgehäuse verbunden ist, wodurch aufgeheiztes aufbereitetes Wasser durch den Wärmetauscher in einer wärmeaustauschenden Beziehung mit dem eintretenden nicht aufbereiteten Wasser geleitet werden kann.

9. Wasseraufbereitungsvorrichtung nach einem der vorhergehenden Ansprüche, wobei das Behälterheizelement (32) eine Leistung von 1500 bis 2500 Watt hat und der Behälter (12) ein Fassungsvermögen von 20 bis 50 Litern aufweist.

10. Wasseraufbereitungsvorrichtung nach einem der Ansprüche 1 bis 8, wobei der Behälter (12) mit dem zweiten Heizelement (32) ein sekundärer Tank ist und die Vorrichtung einen getrennten, größeren Behälter stromabwärts vom Tank umfasst.

11. Wasseraufbereitungsvorrichtung nach einem der vorhergehenden Ansprüche, wobei die Steuerung ausgelegt ist, um dann, wenn das Strömen des nicht aufbereiteten Wassers in das Gehäuse (10) gestoppt wird, das Behälterheizelement (32) gleichzeitig damit oder kurz danach einzuschalten.

12. Wasseraufbereitungsvorrichtung nach einem der vorhergehenden Ansprüche, wobei das Überdruckventil (23) vom Feder- oder Eigengewichttyp ist.

13. Wasseraufbereitungsvorrichtung nach einem der vorhergehenden Ansprüche, wobei das Überdruckventil (23) zu einem Kondensationsrohr (25) und dann zu einem Ablauf führt.

14. Verfahren einer reinigenden Wasseraufbereitungsvorrichtung vom Typ mit einem Aufbereitungsgehäuse (10) für aufzubereitendes Wasser, das ein erstes Heizelement (16) und einen Filter (19) zwischen dem ersten Heizelement (16) und einem Auslass (20) für aufbereitetes Wasser umfasst, wobei die Vorrichtung einen Behälter (12) zum Aufnehmen von aufbereitetem Wasser aus dem Aufbereitungsgehäuse umfasst, wobei das Verfahren die Schritte des Filterns von Wasser im Aufbereitungsgehäuse, des Schickens einer Strömung des aufbereiteten Wassers in den Behälter, des Stoppens der Wasserströmung durch die Vorrichtung, des Aufheizens von aufbereitetem Wasser im Behälter, um Dampf zu erzeugen, und des Leitens des Dampfes durch die Vorrichtung in einer umgekehrten Richtung zu einer normalen Aufbereitungs-Strömungsrichtung des Wassers umfasst.

15. Verfahren nach Anspruch 14, wobei der Dampf auch in der Richtung einer normalen Aufbereitungs-Strömungsrichtung des Wassers aus dem Behälter (12) geleitet wird, um die Vorrichtung stromabwärts des Behälters zu reinigen.

## Revendications

1. Appareil de traitement d'eau comprenant un logement de traitement (10) qui contient un premier réchauffeur (16) et un filtre (19) de traitement de l'eau,
le logement étant raccordé à un réservoir (12) recevant de l'eau traitée du logement,
le réservoir contenant un deuxième réchauffeur (32) qui chauffe l'eau traitée de manière à produire de la vapeur,
des commandes de démarrage et d'arrêt de l'écoulement de l'eau à traiter à travers le logement ainsi que de branchement du réchauffeur (32) du réservoir et d'arrêt de l'écoulement de l'eau lorsqu'un désinfection est requise,
de la vapeur pouvant être passée à travers l'appareil dans la direction inverse à celle de l'eau,
le logement présentant une soupape de délestage (23) qui permet à la vapeur de s'échapper du réservoir,
le filtre (19) étant disposé entre le premier réchauffeur (16) et la sortie (20) prévue pour l'eau traitée.

2. Appareil de traitement d'eau selon la revendication 1, dans lequel le réservoir (12) est en métal ou en matière plastique et peut résister à une pression d'au moins un bar et à une température pouvant atteindre 120°C.

3. Appareil de traitement d'eau selon les revendications 1 ou 2, dans lequel le logement (10) est une cartouche jetable.

4. Appareil de traitement d'eau selon les revendications 1, 2 ou 3, dans lequel le premier réchauffeur (16) est situé en dessous du filtre (19).

5. Appareil de traitement d'eau selon la revendication 4, qui contient un ou plusieurs tamis ou treillis perforés entre le premier réchauffeur (16) et le filtre (19).

6. Appareil de traitement d'eau selon l'une quelconque des revendications précédentes, dans lequel le logement (10) présente une sonde de détection du niveau de l'eau et les commandes de l'appareil sont agencées de manière à arrêter l'entrée d'eau lorsqu'un niveau maximum prédéterminé (18) est atteint par l'eau, le niveau maximum laissant un espace mort (22) au-dessus de l'eau dans le logement.

7. Appareil de traitement d'eau selon la revendication 6, dans lequel la soupape de délestage (23) permettant à la vapeur de s'échapper du réservoir (12) est disposée au-dessus du niveau maximum (18) de l'eau de manière à permettre à la vapeur et aux substances volatiles provenant de l'eau traitée de s'échapper hors de l'espace mort (22).

8. Appareil de traitement d'eau selon l'une quelconque des revendications précédentes, comprenant un échangeur de chaleur (11) raccordé à une entrée (17) du logement de traitement (10), l'eau non traitée pouvant traverser l'échangeur de chaleur sur son parcours vers le logement de traitement, l'échangeur de chaleur étant également raccordé à la sortie (20) du logement de traitement, ce qui permet à l'eau traitée et chauffée de traverser l'échangeur de chaleur en relation d'échange de chaleur avec l'eau non traitée entrante.

9. Appareil de traitement d'eau selon l'une quelconque des revendications précédentes, dans lequel le réchauffeur (32) du réservoir présente une puissance de 1 500 à 2 500 watts et le réservoir (12) présente une capacité de 20 à 50 litres.

10. Appareil de traitement d'eau selon l'une quelconque des revendications 1 à 8, dans lequel le réservoir (12) doté du deuxième réchauffeur (32) est une cuve secondaire, l'appareil comprenant un réservoir séparé plus grand situé en aval de la cuve.

11. Appareil de traitement d'eau selon l'une quelconque des revendications précédentes, dans lequel les commandes sont agencées pour raccorder le réchauffeur (32) du réservoir en même temps ou peu après l'arrêt de l'écoulement d'eau non traitée vers le logement (10).

12. Appareil de traitement d'eau selon l'une quelconque des revendications précédentes, dans lequel la soupape (23) de délestage de pression est du type à ressort ou à poids mort.

13. Appareil de traitement d'eau selon l'une quelconque des revendications précédentes, dans lequel la soupape (23) de délestage de pression conduit à un tube (25) de condenseur et ensuite à un drain.

14. Procédé de désinfection d'un appareil de traitement d'eau du type présentant
un logement de traitement (10) pour l'eau à traiter, lequel logement contient un premier réchauffeur (16) et un filtre (19) disposé entre le premier réchauffeur (16) et une sortie (20) prévue pour l'eau traitée,
l'appareil comprenant un réservoir (12) qui reçoit l'eau traitée du logement de traitement,
le procédé comprenant les étapes qui consistent à filtrer l'eau dans le logement de traitement, à faire s'écouler l'eau traitée dans le réservoir, à interrompre l'écoulement d'eau qui traverse l'appareil, à chauffer l'eau traitée présente dans le réservoir pour produire de la vapeur et à faire passer la vapeur à travers l'appareil dans une direction inverse de la direction normale d'écoulement d'eau de traitement.

15. Procédé selon la revendication 14, dans lequel la vapeur est également passée dans la direction de l'écoulement normal d'eau de traitement depuis le réservoir (12), de manière à désinfecter l'appareil en aval du réservoir.
